**Europäisches Patentamt**

**European Patent Office**

**Office européen des brevets**

(19)

(11) Veröffentlichungsnummer: **0 513 779 B1**

(12) # EUROPÄISCHE PATENTSCHRIFT

(45) Veröffentlichungstag der Patentschrift: **08.02.95**

(51) Int. Cl.6: **C04B 11/024**, C04B 11/26, C04B 11/05

(21) Anmeldenummer: **92108139.4**

(22) Anmeldetag: **14.05.92**

---

(54) **Verfahren und Anlage zur Herstellung von Anhydrit-Fliessestrichgips.**

---

(30) Priorität: **14.05.91 DE 4115699**

(43) Veröffentlichungstag der Anmeldung:
**19.11.92 Patentblatt 92/47**

(45) Bekanntmachung des Hinweises auf die
Patenterteilung:
**08.02.95 Patentblatt 95/06**

(84) Benannte Vertragsstaaten:
**BE DE DK FR GB IT NL SE**

(56) Entgegenhaltungen:
**EP-A- 0 196 372**
**EP-A- 0 306 791**
**EP-A- 0 492 567**
**DE-A- 3 635 237**
**FR-A- 2 161 925**

**ZEMENT, KALK, GIPS. Bd. 41, Nr. 9, September 1988, WIESBADEN DE Seiten 434 -442 W.KREFT 'Thermische Behandlung mineralischer Rohstoffe mit dem Trägergasverfahren**

(73) Patentinhaber: **KRUPP POLYSIUS AG**
**Graf-Galen-Strasse 17**
**D-59269 Beckum (DE)**

Patentinhaber: **ROCAL B.V.**
**Postfach 245**
**NL-2880 AE Gouda (NL)**

(72) Erfinder: **Schulte, Hans-Gerd, Dipl.-Ing.**
**Pannenberg 46**
**W-4720 Beckum (DE)**
Erfinder: **Kappe, Jantinus**
**Westereems 5**
**NL-9642 KP Veendam (NL)**

(74) Vertreter: **Tetzner, Volkmar, Dr.-Ing. Dr. jur.**
**Van-Gogh-Strasse 3**
**D-81479 München (DE)**

---

EP 0 513 779 B1

**Beschreibung**

Die Erfindung betrifft ein Verfahren (gemäß dem Oberbegriff des Anspruches 1) sowie eine Anlage (entsprechend dem Gattungsbegriff des Anspruches 6) zur Herstellung von Anhydrit-Fließestrichgips.

Durch die DE 38 27 613 A1 ist es bekannt, Anhydrit-Fließestrichgips in einem Drehrohrofen bei Temperaturen zwischen 700 und 900 °C herzustellen.

Der dem Dokument EP-A-0 492 567 zugrundeliegender Gegenstand ist als einschlägiger Stand der Technik anzusehen. Es fällt jedoch unter Artikel 54(3) EPÜ.

Weiterhin hat man auch bereits versucht, Estrichgips in der zirkulierenden Wirbelschicht zu erzeugen.

Die Herstellung von Anhydrit II für Fließestrich mit diesen bekannten Verfahren erweist sich jedoch als sehr schwierig, da die für diesen Zweck erforderlichen Produkteigenschaften nicht gezielt eingestellt werden können. Estrichgips soll gute rheologische Eigenschaften haben; der Wasser-/Gipswert soll niedrig sein und 0,4 nicht überschreiten. Von besonderer Bedeutung sind ferner Abbindeverhalten und Festigkeitsentwicklung. Eine genaue Einstellung dieser gewünschten Produkteigenschaften - insbesondere eines Wasser-/Gipswertes von nicht mehr als 0,4 - war mit den bisher bekannten Verfahren nicht möglich.

Für die Herstellung von Putz- und Stuckgipsen hat man weiterhin auch Trägergas-Brennverfahren eingesetzt (Zement-Kalk-Gips Nr. 8/1972, S.383 bis 386). Dieses Verfahren erschien jedoch für die sehr schwierige Herstellung von Anhydrit II für Fließestrich bisher als nicht geeignet.

Der Erfindung liegt die Aufgabe zugrunde, ein Verfahren sowie eine Anlage zu schaffen, die es ermöglichen, Anhydrit-Fließestrichgips herzustellen, der gute rheologische Eigenschaften aufweist, dessen Wasser-Gipswert 0,4 nicht überschreitet und der darüber hinaus ein gutes Abbindeverhalten sowie hohe Festigkeitswerte besitzt.

Diese Aufgabe wird erfindungsgemäß durch die kennzeichnenden Merkmale der Ansprüche 1 und 6 gelöst. Zweckmäßige Ausgestaltungen der Erfindung sind Gegenstand der Unteransprüche.

Als Ausgangsmaterial des erfindungsgemäßen Verfahrens findet REA-Gips Verwendung, d. h. der bei der Entschwefelung der Rauchgase in Steinkohle- und Braunkohle-Kraftwerken anfallende Gips. Dieser REA-Gips ist bezüglich seiner chemischen Zusammensetzung dem Naturgips gleichzusetzen. Er fällt als Filterkuchen mit einer Feuchte von ca. 7 bis 10 % an und besteht überwiegend aus Kristallen von 10 bis 100 $\mu$m.

Der als Filterkuchen mit einer Feuchte von 7 bis 10 % als Ausgangsmaterial verwendete REA-Gips wird in einer Trocknungszone (vorzugsweise bestehend aus einem Steigrohrtrockner mit integriertem Desagglomerator) auf eine Endfeuchte von 0,5 bis 1,0 % getrocknet. Die Beheizung dieser Trocknungszone erfolgt zweckmäßig mit Abgasen der Calcinier- und Vorwärmzone sowie mit einem Teil der aufgewärmten Kühlluft.

Der getrocknete, feinkörnige REA-Gips wird dosiert einer zweistufigen Vorwärmzone zugeführt, die durch einen zweistufigen Zyklonvorwärmer gebildet wird. In dieser Vorwärmzone wird der REA-Gips auf eine Temperatur zwischen 480 und 550 °C, vorzugsweise etwa 500 °C vorgewärmt. Sodann wird der getrocknete und vorgewärmte REA-Gips in einer Trägergas-Calcinierzone auf eine Calciniertemperatur zwischen 780 und 900 °C erhitzt. In dieser Calcinierzone erfolgt die vollständige Abspaltung des Kristallwassers, und das Material wird auf die für die angestrebten Produkteigenschaften erforderliche Temperatur aufgeheizt.

Das calcinierte Gut wird dann in einer Kühlzone unter Rückgewinnung der fühlbaren Wärme abgekühlt. Der Kühlprozeß kann zweckmäßig in zwei Stufen durchgeführt werden. Nach der ersten Kühlstufe wird der Anhydrit mechanisch durch einen Trogkettenförderer oder pneumatisch mittels eines Injektors in die zweite Kühlstufe gefördert, die vorteilhaft neben der ersten Kühlstufe angeordnet ist.

Die hocherhitzte Kühlluft der ersten Kühlstufe wird zweckmäßig als Verbrennungsluft in die Calcinierzone geleitet, während die geringer temperierte Kühlluft aus der zweiten Kühlstufe zusammen mit den heißen Abgasen der Calcinier- und Vorwärmzone in der Trocknungszone zur Trocknung des Filterkuchens genutzt wird.

Für die Produkteigenschaften ist von ausschlaggebender Bedeutung, daß bei dem erfindungsgemäßen Verfahren zum einen der REA-Gips mehrstufig getrocknet und vorgewärmt wird, und daß zum anderen die Calciniertemperatur deutlich über der zur Anhydrit-Bildung erforderlichen Temperatur liegt. Durch die mehrstufige Trocknung und Vorwärmung wird die Dekrepitation der Gipskristalle weitgehend vermieden, während die erhöhte Calciniertemperatur entscheidend für die Erzielung des gewünschten Wasser-/Gipswertes < 0,40 ist. Der geringe Kornzerfall durch die mehrstufige Trocknung und Vorwärmung kann durch Bestimmung der spezifischen Oberfläche nach Blaine am Aufgabegut und am Calcinat nachgewiesen werden.

Zwar wird - wie im Röntgendiffraktometer nachgewiesen werden kann - schon bei einer Calciniertemperatur von 700 °C die Umwandlung in Anhydrit II erzielt, doch liegt hierbei der Wasser-/Gipswert zwischen

2

0,45 und 0,50. Erst eine Erhöhung der Calciniertemperatur auf 780 bis 900°C bringt überraschend eine Verminderung des Wasser-/Gipswertes auf 0,32 bis 0,35, ohne daß hierdurch die übrigen Produkteigenschaften negativ beeinflußt werden.

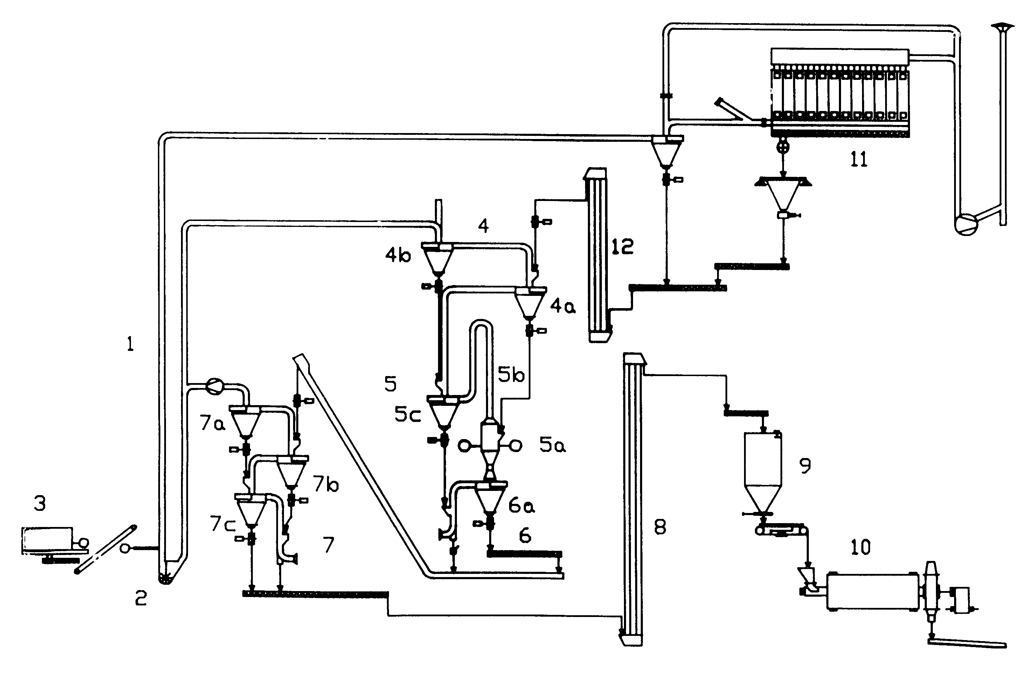

Ein Ausführungsbeispiel einer Anlage zur Durchführung des erfindungsgemäßen Verfahrens ist in der Zeichnung schematisch veranschaulicht.

Die Anlage enthält einen Steigrohrtrockner 1 mit integriertem Desagglomerator 2. Die Aufgabe des REA-Gipses in den Steigrohrtrockner 1 erfolgt über einen Kastenbeschicker 3.

Die Anlage enthält weiterhin eine Vorwärmzone 4, die zwei Vorwärmzyklone 4a, 4b aufweist.

An die Vorwärmzone 4 schließt sich eine Calcinierzone 5 an, zu der ein mit mehreren Gasbrennern 5a ausgerüsteter Calcinierschacht 5b sowie ein Zyklon 5c gehört.

Weiterhin enthält die Anlage eine Kühlzone, bestehend aus einer ersten Kühlstufe 6 und einer zweiten Kühlstufe 7. Die erste Kühlstufe 6 besteht aus einem Kühlzyklon 6a, während die zweite Kühlstufe 7 drei Kühlzyklone 7a, 7b, 7c aufweist.

Das Kühlgut gelangt über ein Becherwerk 8 zu einem Silo 9, aus dem eine Kugelmühle 10 beschickt wird.

Die den Steigrohrtrockner 1 verlassenden Abgase werden in einem Schlauchfilter 11 gereinigt. Der aus diesen Abgasen abgeschiedene, getrocknete REA-Gips wird über ein Becherwerk 12 der Vorwärmzone 4 aufgegeben.

Mit einer Pilotanlage der in der Zeichnung schematisch veranschaulichten Art wurden umfangreiche Calcinierversuche durchgeführt.

Als Versuchsgut dienten REA-Gipse aus Steinkohlekraftwerken, die als Filterkuchen mit ca. 7 bis 10 % Feuchte vorlagen. Die Filterkuchen wurden mit einer Aufgabemenge von 350 kg/h dem Steigrohrtrockner 1 aufgegeben und mit den Abgasen der Vorwärm- und Calcinierzone (die eine Temperatur von ca. 450 °C aufwiesen) auf ca. 0,5 % Restfeuchte getrocknet.

Nach der Trocknung lag der REA-Gips als feinkörniges und gut fließfähiges Mehl vor, das in der Vorwärmzone 4 auf ca. 450°C vorgewärmt wurde, ehe es in die Calcinierzone 5 geführt wurde. Hier erfolgte die vollständige Austreibung des restlichen Kristallwassers und die Einstellung der geforderten Produkteigenschaften (s. unten). Hiernach gelangte das Calcinat in die zweistufige Kühlzone, wo im Luftstrom die Abkühlung auf ca. 80°C erfolgte.

In einer ersten Versuchsreihe wurde eine Calciniertemperatur von ca. 700°C eingestellt, die zur vollständigen Austreibung des Kristallwassers und zur Umwandlung des Gipses in Anhydrit II ausreichte. Die Umwandlung in die Anhydrit-II-Phase wurde mittels Röntgen-Diffraktometer nachgewiesen. Die technologischen Untersuchungen des Calcinats ergaben jedoch einen Wasser-/Gipswert von 0,48, ein unbefriedigendes Abbindeverhalten und unzureichende Festigkeiten.

Stufenweise wurde sodann die Calciniertemperatur bis auf 830°C erhöht. Ab einer Calciniertemperatur von 800°C wurden sehr gute Ergebnisse erzielt. Die optimale Calciniertemperatur schwankte für REA-Gipse unterschiedlicher Provenienz zwischen 780 und 900°C. In diesem Temperaturbereich wurden Wasser-/Gips-Werte von 0,32 - 0,38 erreicht.

Zur Erreichung guter Fließeigenschaften (die Voraussetzung für selbstnivellierenden Fließestrich sind) und hoher Mörtelfestigkeiten erfolgt zweckmäßig eine Vermahlung der REA-Anhydrite auf 2500 bis 3500 cm$^2$/g, vorzugsweise auf 3000 bis 3200 cm$^2$/g (gemessen nach Blaine). Die Mahlung kann in einer Rohrmühle ohne Sichter mit Kugeln oder vorteilhaft mit Zylpebsen von 20 mm Durchmesser durchgeführt werden. Durch die Feinmahlung steigt der Wasser-/Gipswert um ca. 0,03.

In Tab.1 sind einige wesentliche Ergebnisse der halbtechnischen Versuche mit REA-Gips aufgeführt. Man erkennt insbesondere die starke Abhängigkeit des Wasser-/Gipswertes von der Calciniertemperatur.

In Tab.2 sind Festigkeitswerte von nach dem erfindungsgemäßen Verfahren hergestellten Anhydriten wiedergegeben. Bei den Proben STK1, STK2 und STK3 handelt es sich um Anhydrite aus drei verschiedenen Steinkohlekraftwerken.

In der Tab.2 sind die Ergebnisse der Normenprüfung aufgeführt. Der erzeugte Anhydrit übertraf nach der Vermahlung in einer Einkammer-Rohrmühle in allen Fällen die Anforderung der DIN 4208.

Tabelle 1: Ergebnisse halbtechnischer Versuche mit REA-Gips

| Vers. Nr. | Temperatur $^{\circ}$C im Calcinator | im Vorwärmer | spez. Oberfläche nach Blaine $(cm^2/g)$ nach Trockner | vor Mahlung | nach Mahlung | Wasser/Gipswert vor Mahlung | nach Mahlung |
|---|---|---|---|---|---|---|---|
| 1 | 700 | 405 | 1020 | 1170 | 3250 | 0,47 | 0,51 |
| 2 | 750 | 430 | 1020 | 1140 | 3300 | 0,46 | 0,50 |
| 3 | 800 | 445 | 1020 | 1180 | 3190 | 0,35 | 0,41 |
| 4 | 830 | 465 | 1020 | 1160 | 3120 | 0,34 | 0,40 |

EP 0 513 779 B1

# EP 0 513 779 B1

Tabelle 2

| Festigkeitswerte von erfindungsgemäß hergestelltem Anhydrit | | | | |
|---|---|---|---|---|
| Festigkeitswerte in N/mm² (Bestimmung gemäß DIN 4208) | | | | |
| | 3 Tage | | 28 Tage | |
| Probe | Biegezugfestigk. | Druckfestigk. | Biegezugfestigk. | Druckfestigk. |
| STK1 | 3,7 | 30,5 | 8,0 | 41,0 |
| STK2 | 3,0 | 18,1 | 7,5 | 36,7 |
| STK3 | 2,8 | 18,5 | 8,4 | 38,4 |
| *AB20 | 1,6 | 8,0 | 4,0 | 20,0 |

*) Mindestfestigkeit nach DIN 4208 für Anhydrit der Güteklasse AB20

**Patentansprüche**

1. Verfahren zur Herstellung von Anhydrit-Fließestrichgips, gekennzeichnet durch folgende Verfahrensschritte:

   a) als Ausgangsmaterial findet in Rauchgasentschwefelungsanlagen anfallender Gips (REA-Gips) Verwendung;

   b) das Ausgangsmaterial wird nach Trocknung in einer zweistufigen Vorwärmzone (4) vorgewärmt;

   c) das vorgewärmte Material wird dann in einer Trägergas-Calcinierzone (5) auf eine Calciniertemperatur zwischen 780 und 900 °C erhitzt;

   d) nach Kühlung wird das calcinierte Material auf eine spezifische Oberfläche von 2500 bis 3500 cm²/g (gemessen nach Blaine) vermahlen.

2. Verfahren nach Anspruch 1, dadurch gekennzeichnet, daß das getrocknete Ausgangsmaterial vor Aufgabe in die Calcinierzone (5) auf eine Temperatur zwischen 480 und 550 °C vorgewärmt wird.

3. Verfahren nach Anspruch 1, dadurch gekennzeichnet, daß das calcinierte Material zweistufig mittels Luft gekühlt wird, wobei die Kühlluft der ersten Kühlstufe (6) als Verbrennungsluft der Calcinierzone zugeführt wird, während die Kühlluft der zweiten Kühlstufe (7) zusammen mit Abgasen der Vorwärmzone (4) zur Trocknung des Ausgangsmateriales Verwendung findet.

4. Verfahren nach Anspruch 1, dadurch gekennzeichnet, daß das gekühlte Material auf eine spezifische Oberfläche von 2800 bis 3200 cm²/g (gemessen nach Blaine) vermahlen wird.

5. Verfahren nach Anspruch 1, dadurch gekennzeichnet, daß die Vermahlung des gekühlten Materiales im Durchlaufbetrieb in einer Einkammer-Rohrmühle unter Zugabe von Zylpebsen oder Kugeln, vorzugsweise mit einem Durchmesser von 10 bis 30 mm, insbesondere 20 mm, erfolgt.

6. Anlage zur Herstellung von Anhydrit-Fließestrichgips unter Verwendung von in Rauchgasentschwefelungsanlagen anfallendem Gips (REA-Gips) als Ausgangsmaterial, mit folgenden Anlagenteilen:

   a) einer vorzugsweise als Steigrohrtrockner (1) mit integriertem Desagglomerator (2) ausgebildeten Trocknungszone,

   b) einer als zweistufiger Zyklonvorwärmer ausgebildeten Vorwärmzone (4),

   c) einer Trägergas-Calcinierzone (5), die einen mit mehreren Calcinierbrennern (5a) ausgerüsteten Calcinierschacht (5b) und einen zur Abscheidung des Calcinats dienenden Zyklon (5c) enthält,

   d) einer vorzugsweise zweistufigen Kühlzone (6, 7),

   e) sowie mit einer vorzugsweise als Einkammerrohrmühle ausgebildeten Mahlzone.

7. Anlage nach Anspruch 6, dadurch gekennzeichnet, daß die beiden Stufen (6, 7) der Kühlzone nebeneinander angeordnet sind und eine vorzugsweise als Injektorförderer oder als Trogkettenförderer ausgebildete, zur Förderung des vorgekühlten Materiales aus der ersten in die zweite Kühlstufe dienende Fördereinrichtung vorgesehen ist.

5

## Claims

1. Method of producing flowable anhydrite flooring plaster, characterised by the following method steps:
   a) gypsum precipitated in flue gas desulphurisation plants (FGD gypsum) is used as the starting material;
   b) after drying, the starting material is preheated in a two-stage preheating zone (4);
   c) the preheated material is then heated in a carrier gas calcination zone (5) to a calcination temperature between 780 and 900°C;
   d) after cooling, the calcined material is ground to a specific surface area of 2500 to 3500 cm$^2$/g (measured according to Blaine).

2. Method as claimed in Claim 1, characterised in that before the dried starting material is fed into the calcination zone (5) it is preheated to a temperature between 480 and 550 °C.

3. Method as claimed in Claim 1, characterised in that the calcined material is cooled in two stages by means of air, the cooling air from the the first cooling stage (6) being supplied to the calcination zone as combustion air, whilst the cooling air from the second cooling stage (7) is used together with exhaust gases from the preheating zone (4) for drying the starting material.

4. Method as claimed in Claim 1, characterised in that the cooled material is ground to a specific surface area of 2800 to 3200 cm$^2$/g (measured according to Blaine).

5. Method according to Claim 1, characterised in that the grinding of the cooled material takes place in continuous operation in a single-chamber tube mill with the addition of Cylpebs or balls, preferably with a diameter of 10 to 30 mm, particularly 20 mm.

6. Apparatus for producing flowable anhydrite flooring plaster using gypsum precipitated in flue gas desulphurisation plants (FGD gypsum) as the starting material, with the following apparatus parts:
   a) a drying zone preferably constructed as a pneumatic conveyor dryer (1) with integrated disagglomerator (2),
   b) a preheating zone (4) constructed as a two-stage cyclone preheater,
   c) a carrier gas calcination zone (5) which contains a calcination shaft (5b) equipped with a plurality of calcination burners (5a) and a cyclone (5c) serving for precipitation of the calcinate,
   d) a preferably two-stage cooling zone (6, 7),
   e) and a grinding zone preferably constructed as a single-chamber tube mill.

7. Apparatus as claimed in Claim 6, characterised in that the two stages (6, 7) of the cooling zone are disposed adjacent to one another and a conveyor arrangement is provided which is preferably constructed as an injector conveyor or as a trough chain conveyor and serves for conveying the precooled material out of the first cooling stage into the second cooling stage.

## Revendications

1. Procédé de production de gypse à planchers fluide à l'anhydrite, caractérisé par les étapes suivantes du procédé :
   a) la matière première utilisée est le gypse produit dans des installations de désulfuration de gaz de fumée (gypse IDG) ;
   b) la matière première est réchauffée après séchage dans une zone de réchauffage à deux étages (4) ;
   c) la matière réchauffée est ensuite chauffée dans une zone de calcination (5) à gaz vecteur à une température de calcination comprise entre 780 et 900°C ;
   d) après refroidissement, la matière calcinée est broyée à une surface spécifique de 2500 à 3500 cm$^2$/g (mesurée d'après Blaine).

2. Procédé selon la revendication 1, caractérisé en ce que la matière première séchée est réchauffée à une température comprise entre 480 et 550°C avant d'être envoyée dans la zone de calcination (5).

**3.** Procédé selon la revendication 1, caractérisé en ce que la matière calcinée est refroidie à l'air en deux étages, l'air de refroidissement du premier étage de refroidissement (6) étant envoyé dans la zone de calcination pour servir d'air comburant, tandis que l'air de refroidissement du second étage de refroidissement (7) est utilisé avec les gaz évacués de la zone de réchauffage (4) pour le séchage de la matière première.

**4.** Procédé selon la revendication 1, caractérisé en ce que la matière refroidie est broyée à une surface spécifique de 2800 à 3200 cm$^2$/g (mesurée d'après Blaine).

**5.** Procédé selon la revendication 1, caractérisé en ce que le broyage de la matière refroidie est effectué en régime continu dans un tube broyeur à une chambre avec addition de sylpeps ou de boulets, de préférence d'un diamètre de 10 à 30 mm, en particulier de 20 mm.

**6.** Installation de production de gypse à planchers fluide à l'anhydrite à l'aide d'une matière première constituée de gypse produit dans des installations de désulfuration de gaz de fumée (gypse IDG), comprenant les éléments suivants d'installation :

a) une zone de séchage conformée de préférence en séchoir à conduite montante (1) à désagglomérateur intégré (2),

b) une zone de réchauffage (4) constituée d'un réchauffeur à cyclones à deux étages,

c) une zone de calcination à gaz vecteur (5), qui comprend une colonne de calcination (5b) équipée de plusieurs brûleurs de calcination (5a), ainsi qu'un cyclone (5c) servant à la séparation du produit de calcination,

d) une zone de refroidissement de préférence en deux étages (6, 7),

e) ainsi qu'une zone de broyage constituée de préférence d'un tube broyeur à une chambre.

**7.** Installation selon la revendication 6, caractérisée en ce que les deux étages (6, 7) de la zone de refroidissement sont disposés l'un à côté de l'autre et un dispositif de transport, conformé de préférence en transporteur à pompe à jet ou en transporteur à chaîne à godets et servant au transport de la matière prérefroidie du premier dans le second étage de refroidissement, est prévu.